# EUROPÄISCHE PATENTANMELDUNG

(11) **EP 1 541 323 A1**
(43) Veröffentlichungstag der Anmeldung: **15.06.2005**
(21) Anmeldenummer: 04106066.6
(22) Anmeldetag: 25.11.2004
(51) Int. Cl.: B29D 30/06, B29C 33/30

(54) **Verfahren zur Herstellung von Reifenformen für Fahrzeugreifen**

(30) Priorität: 10.12.2003 DE 10357627
(71) Anmelder: Continental Aktiengesellschaft, 30165 Hannover (DE)
(72) Erfinder: Sych, Thomas, 30900, Wedemark (DE); Köhne, Stephan, 52146, Würselen (DE); Kretsch, Manuel, 30173, Hannover (DE)

(57) **Zusammenfassung**

Die Erfindung betrifft ein Verfahren zur Herstellung von Reifenformen für Fahrzeugreifen und Reifenformen als solche, insbesondere für Kraftfahrzeugreifen, wobei die Reifenform aus Formsegmenten (1) besteht, die an ihrer Innenseite jeweils ein Profil aufweisen, das als Negativ eines Reifenprofils ausgebildet ist. Erfindungsgemäß sind Pitchsegment (3) separat von den Formsegmenten (1) hergestellt und an diesen befestigt.

## Beschreibung

Die Erfindung betrifft einen Verfahren zur Herstellung von Reifenformen für Fahrzeugreifen und eine Reifenform als solche, insbesondere für Kraftfahrzeugreifen, wobei die Reifenform aus Formsegmenten besteht, die an ihrer Innenseite jeweils ein Pitchsegmentprofil aufweisen, das als Negativ eines Reifenprofils ausgebildet ist.

Reifenformen werden aus Formsegmenten hergestellt, die aus Stahl oder Aluminium bestehen. Zur Fertigung der Formsegmente stehen gemäß dem Stand der Technik zwei Verfahren zur Verfügung, einerseits das in der Vergangenheit ausschließlich angewendete Gießverfahren, andererseits das neu entwickelte Verfahren des direkten Fräsens. Im Gegensatz zu dem Gießverfahren ist das Direktfräsen schnell, so dass entsprechend kürzere Entwicklungs- und Fertigungszeiten verwirklicht werden können. Allerdings sind die Kosten für eine Reifenform bzw. deren Formsegmente relativ hoch.

Alternativ dazu werden Reifen in Handarbeit hergestellt. Insbesondere bei der Entwicklung von Reifen werden die Reifenprofile überwiegend von Hand geschnitzt, wobei die geschnitzten Reifen Eigenschaften haben, die sich nicht auf die Eigenschaften eines Reifens aus einer Serienfertigung übertragen lassen.

Ausgehend von diesem Stand der Technik liegt der Erfmdung die Aufgabe zu Grunde, ein Verfahren zur Herstellung von Reifenformen und Reifenformen als solche bereit zu stellen, mit denen Reifen hergestellt werden können, die der späteren Serienproduktion entsprechen, wobei die Formen preiswert sind.

Erfindungsgemäß wird diese Aufgabe durch ein gattungsgemäßes Verfahren gelöst, bei dem das Pitchsegment separat von den Formsegmenten hergestellt und an den Formsegmenten befestigt wird. Statt die kompletten Formsegmente zu gießen oder über ein Fräsverfahren mit einer Profilierung zu versehen, wird das Pitchsegmentprofil separat hergestellt, beispielsweise im Metallspritzgußverfahren, durch Fräsen oder Lasern-Sintern, und anschließend an den Formsegmenten befestigt. Dadurch können insbesondere Prototypenreifen gefertigt werden, die denen der späteren Serienproduktion entsprechen, wobei die Reifenformen preiswerter als die herkömmlichen Formen sind. Beispielsweise können zur Herstellung der Formen alte, nicht mehr verwendbare Formen ausgedreht und weiterverwendet werden, indem die alten Formen bzw. Formsegmente als Träger für die Pitchsegmente dienen.

Eine Weiterbildung des Verfahrens sieht vor, dass das Pitchsegmentprofil aus mehreren Profileinzelteilen zusammengesetzt wird, also dass nur einzelne Komponenten des Pitchsegmentprofils durch die Profileinzelteile gebildet werden. Durch die Kombinierbarkeit mehrerer Profileinzelteile zu neuen Pitchsegmenten und Pitchsegmentprofilen können Prototypenreifen leichter hergestellt und Variationen schneller verwirklicht werden.

Eine Möglichkeit zur Erzeugung der Pitchsegmente oder der Profileinzelteile besteht darin, dass zunächst Pitchsegmentnegative erzeugt werden, die dem zu fertigenden Reifenprofil entsprechen bzw. Abschnitten des zu fertigenden Reifenprofils entsprechen. Die Pitchsegmentnegative werden beispielsweise duch Lasersintern oder Fräsen hergestellt, während die Pitchsegmente oder die Profileinzelteile vorzugsweise gegossen werden. Von den Pitchsegmentprofilnegativen werden also die Pitchsegmente oder die Profileinzelteile abgenommen, dies kann durch Abformen oder in einem Metallspritzgußverfahren geschehen.

Eine Ausführungsform der Erfindung sieht vor, dass die Pitchsegmentprofilnegative, das Pitchsegmentprofil oder aber die Profileinzelteile mittels Lasersintern erzeugt werden, wodurch beliebige Profile in hoher Geschwindigkeit, preiswert und variabel erzeugt werden können.

Die erfindungsgemäße Reifenform zur Herstellung insbesondere von Kraftfahrzeugreifen sieht vor, dass die Reifenform aus Formsegmenten besteht, die an einer ihrer Innenseite jeweils ein Pitchsegmentprofil aufweisen, das als Negativ eines Reifenprofils ausgebildet ist, wobei das Pitchsegmentprofil separat gefertigt und an den Segmenten befestigt ist.

Das Pitchsegmentprofil kann dabei aus mehreren Pitchsegmenten und dieses aus Profileinzelteilen zusammengesetzt sein, wobei in einer vorteilhaften Ausgestaltung der Erfindung diese lösbar an den Formsegmenten befestigt sind.

Das Pitchsegment oder die Profieinzelteile sind vorteilhafterweise lasergesintert oder gegossen.

Durch die jeweils realitätsnah ausgebildeten Reifenformen ist es möglich, dass die Mischungsverteilung der Prototypenreifen denen der Serienreifen im Wesentlichen entspricht, zumal die Heiztemperaturverteilung und die Ausheizung der Profilkanten in den Prototypenreifen derjenigen der späteren Serienreifen entspricht. Eine 100%ige Wiederholgenauigkeit in der Herstellung ist gegeben; ebenso entfällt eine Veränderung der Glattreifen in der Lauffläche, die bei einem Herstellungsverfahren über Schnitzen auftritt.

Zu Erprobungszwecken sind mit den erfmdungsgemäßen Reifenformen die Herstellung höherer Stückzahlen ohne wesentliche Mehrkosten möglich, so dass Testreifen in ausreichender Anzahl hergestellt werden können. Diese Testreifen entsprechen insbesondere im Fahrzeugtest beim Trockenbremsen, beim Abrieb, beim Nassbremsen, beim Aquaplaning oder im Geräuschverhalten denen der späteren Serienproduktion.

Darüber hinaus sind durch die separate Fertigung der Pitchsegmente und ihre Befestigung an den Formsegmenten der Reifenform, vorzugsweise in alten Segmenten einer Reifenform, geringere Investitionskosten notwendig, insbesondere ist keine gesonderte Auslegung von Glattreifenspritzschablonen für einen Laufstreifenextruder bei der Herstellung von Prototypenreifen vorzusehen. Darüber hinaus besteht die Möglichkeit, Reifenformen oder Reifenmulden für Kleinserien, z.B. für Oldtimerreifen, bereitzustellen; ebenfalls sind individuelle Reifenformen für spezielle Kunden oder eine Fertigung von Reifen auf Kundenanfrage möglich.

Durch die vorteilhafterweise lösbare Befestigung der Pitchsegmente bzw. der Profileinzelteile ist eine schnelle Variabilität der zu fertigenden Reifenprofile gegeben, ohne das hohe Investitionskosten getätigt werden müssen.

Nachfolgend wird die Erfindung anhand der beigefügten Figuren als Ausführungsbeispiel näher erläutert. Es zeigen:
Figur 1 eine Teilansicht eines Formsegments in Querschnittdarstellung;
Figur 2 eine perspektivische Schrägdraufsicht auf ein Formsegment;
Figur 3 eine Darstellung eines Pitchsegmentnegativs;
Figur 4 ein Pitchsegment entsprechend dem Profil der Figur 3;
Figur 5 zusammengesetzte Pitchsegmente nach Figur 4.

Eine Reifenform besteht aus mehreren Formsegmenten, die auf der Innenseite eine Profilierung aufweisen, die das Negativprofil des Reifenprofils ist. Üblicherweise werden diese Formsegmente gegossen und nachbearbeitet oder aus entsprechenden Vollmaterialien gefräst.

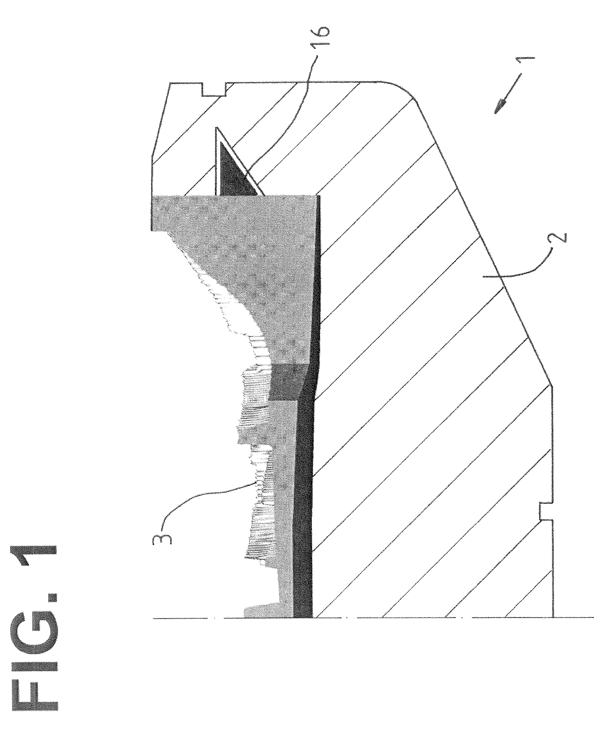

In der Figur 1 ist die Querschnittsansicht eines Formsegmentes 1 dargestellt, das einen Wechselhalter 2 für in dem Formsegment 1 angeordnete Pitchsegmente 3 aufweist. Die Pichtsegmente 3 sind profiltragende Segmente, die wiederkehrende Formen des Reifenprofils aufweisen. Üblicherweise weisen Reifenprofile über den Reifenumfang sich wiederholende Profilabschnitte auf, die als Pitches bezeichnet werden. Ein Pitchsegment 3 bildet ein solches Pitch ab und formt dieses dann während des Herstellungsprozesses des Reifens in der Lauffläche. In den Wechselhalter 2 wird das in der Figur 1 dargestellte Pitchsegment in eine Nut 16 eingelegt, so dass eine zuverlässige geometrische Zuordnung sowohl der jeweiligen Pitchsegmente 3 zueinander als auch zu dem Wechselhalter 2 möglich ist. Der Vorsprung, der in die Nut 16 eingeführt wird, kann entweder an dem Pitchsegment 3 ausgebildet oder an diesem angebracht sein; alternativ kann ein Einklemmen des Pitchsegmentes 3 in dem Wechselhalter über einen Keil in der Nut 16 erfolgen. Ebenfalls ist es möglich, die Pitchsegmente 3 an dem Wechselhalter 2 anzuschrauben.

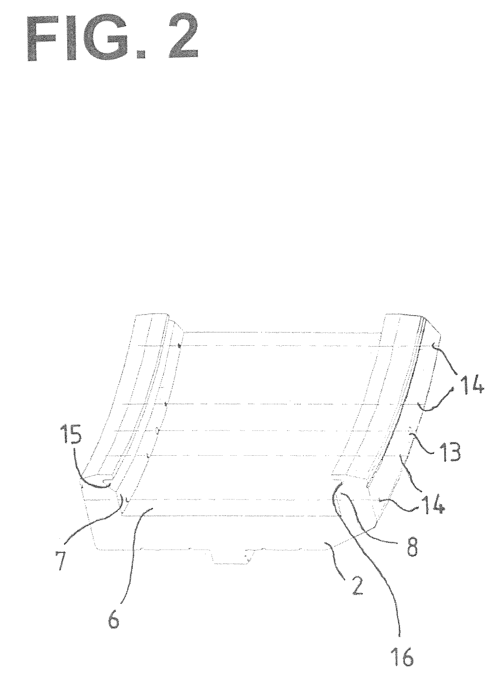

In der Figur 2 ist in der Schrägdraufsicht ein Teil eines Formsegmentes 1 dargestellt, das beispielsweise aus einem alten Formsegment mittels spanender Bearbeitung hergestellt worden ist. Dazu werden die alten Formsegmente ausgedreht und entsprechende Nuten 15, 16 eingefräst. Ebenfalls wird statt einer Profilausbildung die Lauffläche glatt als eine Anschlagfläche 6 ausgebildet, so dass ein Pitchsegment 3 mit der dem Profil abgewandten Seite bündig auf der Anschlagfläche 6 aufliegen kann. Zur seitlichen Führung dienen Innenbacken 7, 8, die ein Verschieben senkrecht zur Laufrichtung auf der Anschlagfläche 6 vermeiden. Die Nuten 15 und 16 dienen dem im Zusammenhang mit der Figur 1 beschriebenen Zweck der Fixierung nicht dargestellter Pichtsegmente. Ebenfalls ist in der Figur 2 die Ausbildung mehrerer Bohrungen 13, 14 zu erkennen, über die die Pitchsegmente fixiert werden können.

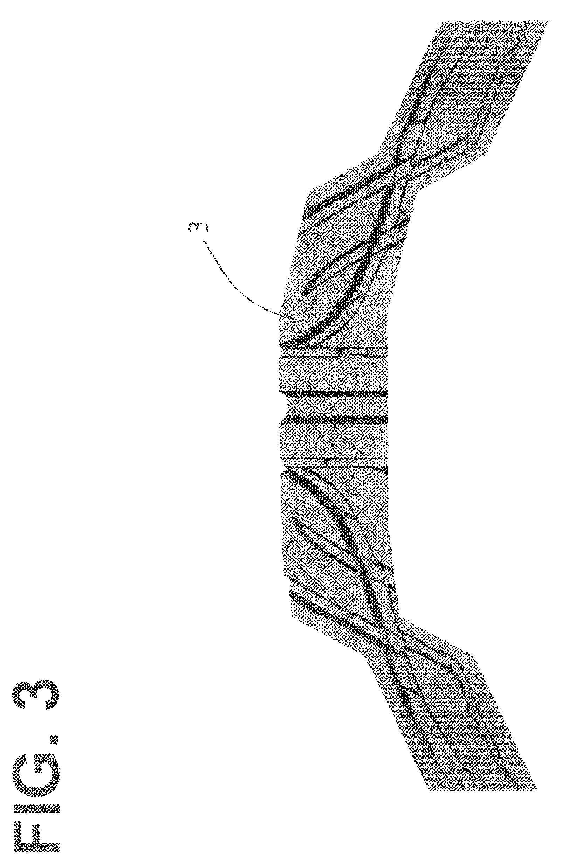

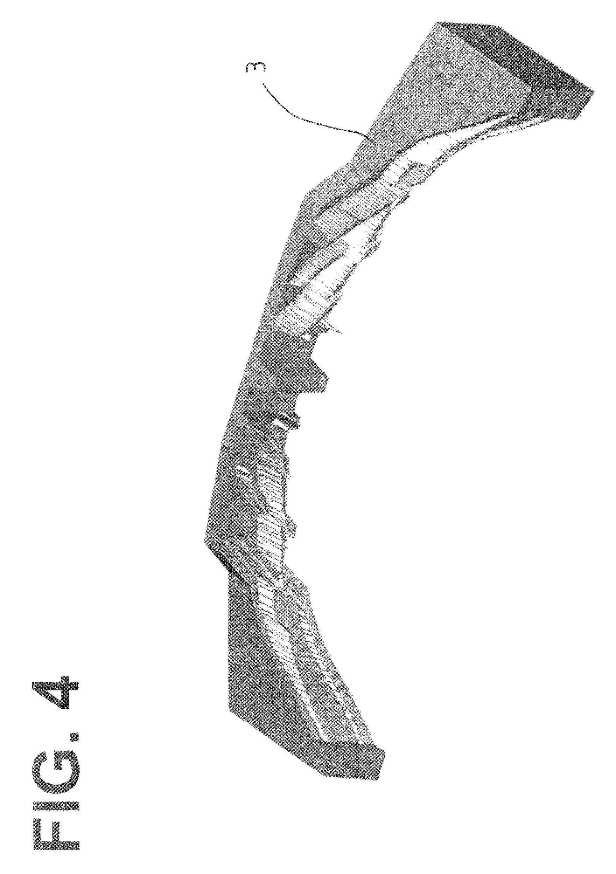

In der Figur 3 ist ein Pitchsegmentnegativ 3' gezeigt, das dem späteren Reifenprofil entspricht. Das Negativ 3' wird gefräst oder mittels Laser-Sintern hergestellt und dient als Form zur Herstellung des Pitchsegmentes 3, das in der Figur 4 dagestellt ist. Das Pitchsegment 3 wird bevorzugt gegossen, beispielsweise über ein Metallspritzgießverfahren, alternativ werden die Pitchsegmente 3 spanend separat gefertigt.

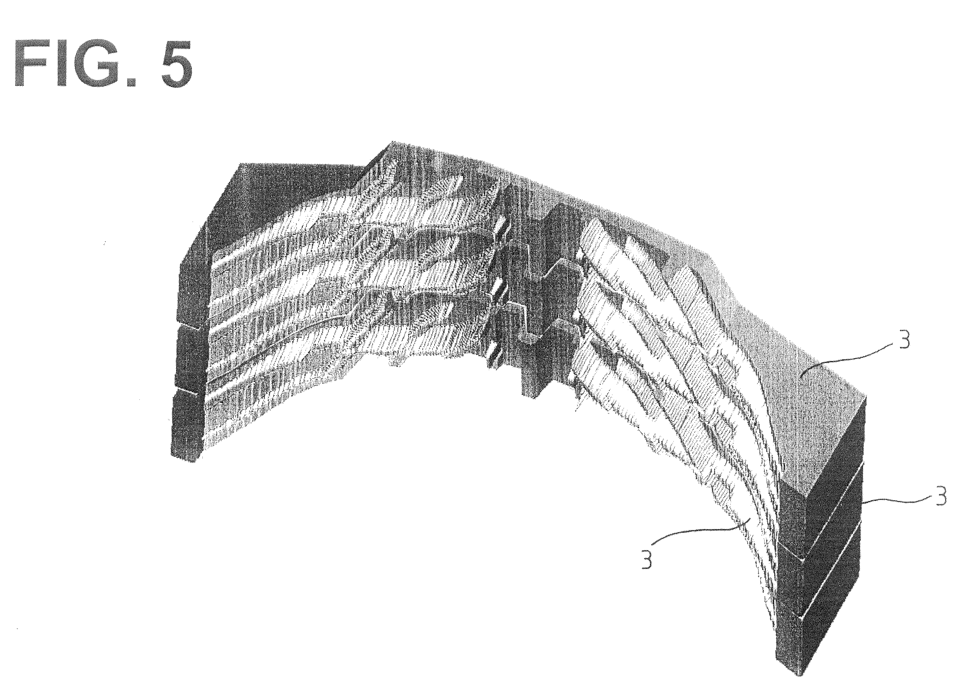

Das Reifenprofil ist dabei das Negativ des Profiles des Pitchsegmentes 3 und entspricht dem Pitchsegmentnegativ 3' und wiederholt sich über den Umfang des zu bildenden Reifens. Durch eine Hintereinanderschaltung mehrerer Pitchsegmente 3 ist es somit möglich, über den gesamten Umfang eines Reifens ein Reifenprofil auszubilden, das aus sich wiederholenden Pitches besteht. Eine solche Hintereinanderanordnung mehrerer Pitchsegmente 3 ist in der Figur 5 dargestellt. Dabei sind drei Pitchsegmente 3 übereinander angeordnet, und es ist zu erkennen, dass ein vollständiges Profil bzw. ein Profilabschnitt ausgebildet ist. Durch das Einlegen mehrerer Pichtsegmente 3 in den Wechselhalter 2, der als Formsegment 1 ausgebildet ist, können sehr schnell entsprechende Reifenformen hergestellt werden. Die Formsegmente 1 werden mit den entsprechenden Pitchsegmenten 3 bestückt, so dass sehr schnell Prototypenreifen gefertigt werden können, die denen der späteren Serienproduktion entsprechen. Dabei sind die Reifenformen mit Pitchsegmenten 3 preiswerter als herkömmlich hergestellte Prototypenformen.

Die Pitchsegmente 3 werden beispielsweise im Metallspritzgussverfahren gegossen, wobei die Negative 3' der Pitchsegmente 3, beispielsweise mit Hilfe des Lasersinterns hergestellt werden können. Andere Formherstellungsverfahren für die Pitchsegmentnegative 3' sind ebenfalls denkbar, beispielsweise Urformverfahren mit entsprechender Nachbehandlung oder nummerisch gesteuertes Fräsen.

## Patentansprüche

1. Verfahren zur Herstellung von Reifenformen für Fahrzeugreifen, insbesondere Kraftfahrzeugreifen, wobei die Reifenform aus Formsegmenten besteht, die an ihrer Innenseite jeweils ein Profil aufweisen, das als Negativ eines Reifenprofils ausgebildet ist, **dadurch gekennzeichnet, dass** Pitchsegmente (3) separat von den Formsegmenten (1) hergestellt und an diesen befestigt werden.

2. Verfahren nach Anspruch 1, **dadurch gekennzeichnet, dass** das Pitchsegment (3) aus mehreren Profileinzelteilen zusammengesetzt wird.

3. Verfahren nach Anspruch 1 oder 2, **dadurch gekennzeichnet, dass** Pitchsegmentnegative (3') erzeugt werden, von denen das Pitchsegment (3) oder die Profileinzelteile abgenommen werden.

4. Verfahren nach einem der voranstehenden Ansprüche, **dadurch gekennzeichnet, dass** die Pichsegmentnegative (3'), das Pitchsegment (3) oder die Profileinzelteile mittels Lasersintern erzeugt werden.

5. Reifenform zur Herstellung insbesondere von Kraftfahrzeugreifen, wobei die Reifenform aus Formsegmenten besteht, die an ihrer Innenseite jeweils ein Profil aufweisen, das als Negativ eines Reifenprofils ausgebildet ist, **dadurch gekennzeichnet, dass** Pitchsegmente (3) mit Pitches des Profils separat gefertigt und an den Formsegmenten (1) befestigt sind.

6. Reifenform nach Anspruch 5, **dadurch gekennzeichnet, dass** das Pitchsegment (3) aus mehreren Profileinzelteilen zusammengesetzt ist.

7. Reifenform nach Anspruch 5 oder 6, **dadurch gekennzeichnet, dass** das Pitchsegment (3) oder die Profileinzelteile lösbar an den Formsegmenten (1) befestigt sind.

8. Reifenform nach einem der Ansprüche 5 bis 7, **dadurch gekennzeichnet, dass** das Pitchsegment (3) oder die Profileinzelteile lasergesintert oder gegossen sind.
